**Europäisches Patentamt**

**European Patent Office**

**Office européen des brevets**

(19)

(11) Veröffentlichungsnummer: **0 005 791**
**B1**

(12)

# EUROPÄISCHE PATENTSCHRIFT

(45) Veröffentlichungstag der Patentschrift:
**25.08.82**

(51) Int. Cl.³: **A 61 C 1/00,** H 03 K 17/78,
H 03 K 17/97

(21) Anmeldenummer: **79101567.0**

(22) Anmeldetag: **22.05.79**

(54) **Ablagevorrichtung für zahnärztliche Handstücke.**

(30) Priorität: **31.05.78 DE 2823858**

(43) Veröffentlichungstag der Anmeldung:
**12.12.79 Patentblatt 79/25**

(45) Bekanntmachung des Hinweises auf die Patenterteilung:
**25.08.82 Patentblatt 82/34**

(84) Benannte Vertragsstaaten:
**FR GB IT SE**

(56) Entgegenhaltungen:
**DE-A-2 005 847**
**DE-A-2 434 094**
**FR-A-1 456 051**
**FR-A-2 328 911**

(73) Patentinhaber: **SIEMENS AKTIENGESELLSCHAFT**
**Berlin und München, Postfach 22 02 61,**
**D-8000 München 22 (DE)**

(72) Erfinder: **Liefke, Johannes, Riedstrasse 15,**
**D-6140 Bensheim (DE)**

Ablagevorrichtung für zahnärztliche Handstücke

Die Erfindung bezieht sich auf eine Ablagevorrichtung für zahnärztliche Handstücke, mit einem hülsen- oder ringförmigen Halterungsteil zur Ablage eines Handstückes und einer elektrischen Schalteinrichtung, die Schaltmittel im Bereich des Halterungsteils enthält, welche bei Entnahme bzw. Ablage des Handstückes aus dem bzw. in das Halterungsteil durch das Handstück betätigt werden.

Bei zahnärztlichen Einrichtungen ist es bekannt, bei Entnahme eines Handstückes aus der Handstückhalterung eine Schaltfunktion auszuführen, beispielsweise das Vorwählen oder Einschalten der elektrischen Versorgung eines Gerätes oder Handstückes bzw. eines diesem zugeordneten elektrischen Verbrauchers, wie z. B. eines Bohrantriebes oder Saugmotors einer Absauganlage. Die Ablagevorrichtung enthält zu diesem Zweck einen elektrischen Schalter, dessen Betätigungselement mit einem durch eine Ausnehmung in dem Halterungsteil in die Öffnung hineinragenden, federbelasteten Schaltstift od. dgl. gekuppelt ist. Bei Entnahme bzw. Ablage des Handstückes aus dem bzw. in das Halterungsteil wird so der Schalter selbsttätig betätigt.

Derartige Ablagevorrichtungen sind — da sie mehrere exakt zueinander passende Teile enthalten — mit einer hohen Maßgenauigkeit und somit relativ aufwendig zu erstellen. Um eine sichere Schaltung zu gewährleisten, ist es außerdem erforderlich, den elektrischen Schalter sowie den durch das Halterungsteil hindurchgreifenden und in die Aufnahmeöffnung für das Handstück hineinragenden Schaltstift mit der dazu erforderlichen Rückstellfeder genau zu justieren. Nachteilig ist ferner, daß die Aufnahmeöffnung für das Handstück am Halterungsteil auf das betreffende Handstück abgestimmt sein muß. Für im Durchmesser stärker voneinander abweichende Handstücke sind demnach unterschiedliche Ablagevorrichtungen zu konstruieren. Aus der FR-A-2 328 911 ist zwar eine Ablagevorrichtung bekannt, bei der die Handstücke durch Unterbrechen eines Luftstromes gesteuert werden, wozu in der Ablagevorrichtung hierzu an einander gegenüberliegenden Stellen Luftaustrittsöffnungen eines pneumatischen Steuerkreises angeordnet sind, der bei entnommenem Handstück geschlossen und bei Einführen des Handstückes in die Ablagevorrichtung unterbrochen wird. Die Vorrichtung arbeitet rein pneumatisch, ist also von der ständigen Bereitstellung von Luft abhängig. Nachteilig ist ferner der ständige Luftverbrauch und Luftaustritt, insbesondere bei entnommenem Handstück. Aus der FR-A-1 456 051 ist ferner eine fotoelektrische Steuereinrichtung bekannt, bei der durch Unterbrechen eines Lichtstromes zwischen Lampe und Fotozelle ein Relais angesteuert wird, dessen Schaltkontakte ein Gerät, z. B. eine Leuchte oder einen Motor, ein-und ausschalten. Das Unterbrechen des Lichtstromes geschieht in an sich bekannter Weise durch Einlegen der Hand in den Lichtstrom.

Aus der DE-A-2 005 847 schließlich ist eine Steuervorrichtung für ein zahnärztliches Gerät bekannt, welches eine Induktionsspule und im Bereich des magnetischen Feldes dieser Spule eine Kurzschlußwindung aufweist, die von Hand betätigt wird. Infolge der Änderung der elektrischen Bedingungen bei der manuellen Kurzschließung der Windung wird ein Steuerapparat betätigt, über den die abgegebene Leistung des Gerätes geschaltet werden kann.

Aufgabe der in den Patentansprüchen 1 und 3 angegebenen Erfindung ist es, eine Ablagevorrichtung der eingangs genannten Gattung, also mit elektrischen Schaltmitteln, zu schaffen, die bezüglich der vorzusehenden Schaltmittel einfach herzustellen und zu montieren ist, die kein genaues Justieren der die Schaltung bewirkenden Teile erfordert, so daß auch ein späteres Nachrüsten leicht ermöglicht ist, und die weitgehend unabhängig ist vom verwendeten Handstücktyp, so daß, um insbesondere auch eine vereinfachte Fertigung und Lagerhaltung zu bekommen, für Handstücke unterschiedlichen Typs und mit unterschiedlichem Handstückdurchmesser, wie z. B. für Turbinenhandstücke, Elektromotorhandstücke und Saughandstücke, gleiche Ablagevorrichtungen verwendet werden können.

Die funktionsgerecht vorbereitete Anordnung von Sender und Empfänger (Anspruch 1) oder Spule (Anspruch 3) auf einem gemeinsamen Träger, der als in das Halterungsteil bzw. als in ein das Halterungsteil aufnehmende Gehäuse einschiebbares Teil ausgebildet, also lösbar dort gehaltert ist, hat u. a. den Vorteil einer leichten Montage und Demontage ohne genaue Justierung, so daß auch ein problemloses Nachrüsten gegeben ist.

Vorteilhafte Ausgestaltungen und Weiterbildungen der Erfindung sind in den Unteransprüchen 2 und 4 bis 7 enthalten.

Zwei Ausführungsbeispiele der Erfindung werden anhand der Zeichnung näher erläutert. Es zeigt

Fig. 1 eine Ablagevorrichtung für zwei Handstücke in schaubildlicher Darstellung,

Fig. 2 ein Teil der Ablagevorrichtung nach Fig. 1 in einer anderen Ausführung,

Fig. 3 ein elektrisches Prinzipschaltbild der Ausführung nach Fig. 1,

Fig. 4 ein elektrisches Prinzipschaltbild der Ausführung nach Fig. 2.

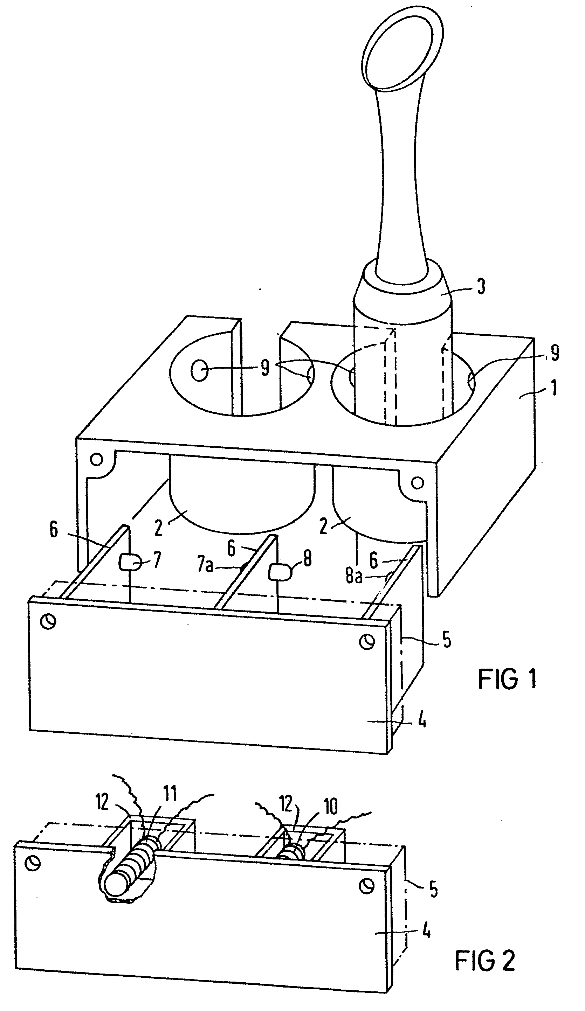

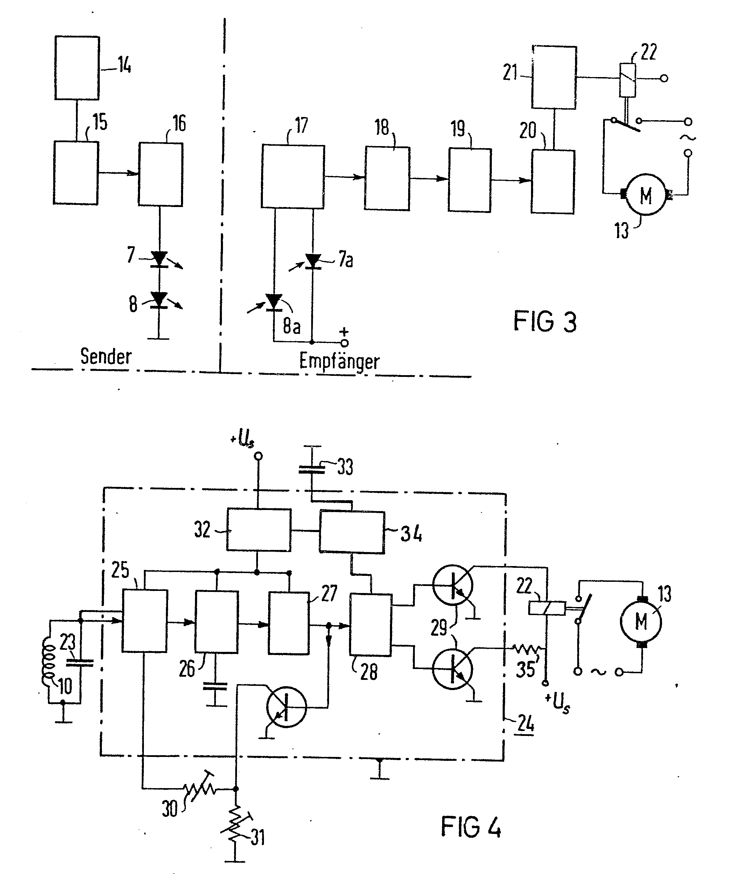

Die Fig. 1 zeigt in einer schaubildlichen Darstellung eine Ablagevorrichtung mit einem Gehäuse 1, welches zwei hülsenförmige Halterungsteile 2 zur Ablage von zahnärztlichen Handstücken 3 aufweist. Im Ausführungsbeispiel ist nur ein Handstück, und zwar ein Saughandstück, dargestellt, bei dessen Entnahme ein Saugmotor eingeschaltet werden soll. Die Halterungsteile 2 sind in bekannter Weise an der vorderen, der Bedienungsseite zugewandten Seite offen, so daß das Handstück 3 mit der an ihm angeschlossenen, in der Darstellung nicht gezeigten Versorgungsleitung aus der Ablagevorrichtung herausgenommen werden kann. Das Gehäuse 1 hat im vorliegenden Anwendungsfall quaderförmige Gestalt und weist eine abnehmbare Rückwand 4 auf. An der Rückwand 4 ist eine mit 5 bezeichnete Platine zur Aufnahme der in Fig. 3 aufgezeigten elektrischen bzw. elektronischen Bauteile bzw. Baugruppen zur Steuerung eines Schaltrelais angeordnet. An der Rückwand 4 sind ferner rechtwinkelig zu ihr abstehende Träger 6 angeordnet, an denen einander gegenüberliegende Lumineszenzdioden 7, 7a, 8 und 8a angeordnet sind. Die Dioden 7, 7a und 8, 8a bilden jeweils eine Lichtschranke, wobei die Teile 7 und 8 jeweils den Sender und die Teile 7a und 8a den Empfänger (Detektor) der Lichtschranke darstellen.

Nachdem die gesamte Ablagevorrichtung und damit auch die Halterungsteile 2 in der Regel aus lichtundurchlässigem Material (meist Kunststoff) gefertigt werden, sind am Umfang der hülsenförmigen Halterungsteile 2 Ausnehmungen 9 vorhanden, und zwar so, daß bei an das Gehäuse anmontierter Rückwand 4 von den Sendern 7 bzw. 8 ausgehende Lichtstrahlen auf den Empfänger 7a bzw. 8a bei entnommenem Handstück auftreffen können. Die Rückwand 4 ist als in das Gehäuse 1 einschiebbares Teil ausgebildet, so daß bei einem Defekt der Elektronik oder der Dioden ein leichter Austausch der Bauteile möglich ist. Die Träger 6 sind zusammen mit der Platine 5 vorteilhafterweise lösbar an der Rückwand 4 befestigt, so daß die Ablagevorrichtung ohne Änderung der Konstruktion entweder als einfache Ablagevorrichtung ohne Schaltmöglichkeit oder mit der Möglichkeit einer Schaltung ausgerüstet bzw. nachträglich umgerüstet werden kann.

Die Fig. 2 zeigt eine Ausführungsform, bei der an der Rückwand 4 anstelle der Dioden 7 und 8 zwei Induktionsspulen 10, 11 an einem entsprechend ausgebildeten Trägerteil 12 befestigt sind. Die Induktionsspulen 10, 11 sind Teil eines in Fig. 4 näher erläuterten Schwingkreises, der bei Annäherung eines Handstückes, beispielsweise des Handstückes 3, an die Spule 10 (bei Ablage in das Teil 2) verstimmt wird und dadurch eine Schaltfunktion auslöst. Auch hier ist die Rückwand 4 als Einschub ausgebildet und Träger der elektrischen bzw. elektronischen Bauteile bzw. Baugruppen zur Steuerung eines Schaltrelais, wie in Fig. 4 aufgezeigt.

Die Fig. 3 zeigt ein Blockschaltbild für eine Ausführung, bei der mit den beiden Lichtschranken 7, 8 ein elektrischer Antrieb 13, z. B. ein Saugmotor, ein- und ausgeschaltet wird. Die Sendeseite der Schalteinrichtung wird im wesentlichen gebildet durch einen von einem Netzteil 14 gespeisten, freilaufenden Oszillator 15 (astabile Kippstufe), der eine Konstantstromquelle 16 ansteuert, die den erforderlichen Strom für die im Infrarot-Bereich arbeitenden Sendedioden 7, 8 liefert. Da die Konstantstromquelle 16 einen eingeprägten Strom für die Dioden 7, 8 liefert, können mehrere Sendedioden vorgesehen werden, ohne daß die Schaltung geändert bzw. nachjustiert zu werden braucht.

Die Empfangsseite wird gebildet aus einer ODER-Stufe 17, einem Wechselspannungsverstärker 18, einem Spitzenwertgleichrichter 19, einem Komparator 20 und einem Relaistreiber 21, welcher ein Relais 22 steuert, deren Schaltkontakte den Antrieb 13 ein- und ausschalten.

Das von den Sendedioden 7 und 8 auf die Empfangsdioden 7a bzw. 8a einfallende IR-Sendesignal wird von der ODER-Schaltung 17, die mehrere IR-Dioden enthält, ausgewertet und dem Wechselspannungsverstärker 18 zugeführt. Das im Wechselspannungsverstärker 18 verstärkte Infrarotsignal wird im Gleichrichter 19 gleichgerichtet und über einen Schwellwertschalter (Komparator 20) dem Relaisteiber 21 zugeführt. Ein verstärktes Infrarot-Empfangssignal tritt nur dann auf, wenn aus den Ablagevorrichtungen ein oder mehrere Handstücke aus ihren Halterungsteilen entnommen werden.

Die Fig. 4 zeigt ein Prinzipschaltbild für die in Fig. 2 dargestellte Lösung mit induktiven Näherungsschaltern. Bei dieser Ausführung bildet die Induktionsspule 10 (bzw. 11) mit einem Kondensator 23 einen Parallelschwingkreis, der bei Annäherung eines Metallteiles (Ablage des aus Metall oder teilweise aus Metall bestehenden Handstückes 3 in die Ablagevorrichtung) verändert wird. Hiermit ändert sich auch die Schwingungsamplitude des in einer monolitisch integrierten Schwellwertschaltstufe 24 angeordneten Oszillators 25. Die Schwingung wird in einem Gleichrichter 26 gleichgerichtet und einem Schwellwertschalter 27 zugeführt. Wird ein bestimmter, in der integrierten Schaltung festgelegter Pegel unterschritten, so spricht der Schwellwertschalter 27 an und schaltet über die Ausgangsstufe 28 mit den beiden Transistoren 29 die zum Relais 22 führenden Ausgänge um, wodurch das Relais entweder angezogen wird oder abfällt. Mit 30 und 31 sind Einstellwiderstände bezeichnet, von denen der eine (30) zur Änderung des Abstandes für die Annäherung an den Schwingkreis 10, 23 und der andere (31) zur Festlegung der Hysterese dient. Mit 32 ist eine Spannungskonstanthaltestufe für die Baugruppen 25 bis 28 bezeichnet. Mit dem Kondensator 33 kann die Verzögerungszeit des Impulsgebers im Schwellwertschalter 27 bestimmt werden.

**Patentansprüche**

1. Ablagevorrichtung für zahnärztliche Handstücke mit einem hülsen- oder ringförmigen Halterungsteil (2) zur Ablage eines Handstückes (3) und einer elektrischen Schalteinrichtung, die Schaltmittel im Bereich des Halterungsteils (2) enthält, welche bei Entnahme bzw. Ablage des Handstückes (3) aus dem bzw. in das Halterungsteil (2) durch das Handstück (3) betätigt werden, dadurch gekennzeichnet, daß als Schaltmittel eine, vorzugsweise im IR-Bereich arbeitende, Lichtschranke (7, 7a/8, 8a) vorgesehen ist, mit in einem definierten, etwa der lichten Weite des Halterungsteils entsprechenden Abstand auf einem Trägerteil (4, 6) korrespondierend angeordneten Sender (7, 8) und Empfänger (7a, 8a), und daß der Träger (4, 6) oder Teile von ihm (6) als in das Halterungsteil (2) der Ablagevorrichtung bzw. in ein dieses aufnehmende Gehäuse (1) einschiebbares Teil ausgebildet ist.

2. Ablagevorrichtung nach Anspruch 1, dadurch gekennzeichnet, daß als Sender und Empfänger jeweils Lumineszenzdioden (7, 7a, 8, 8a) verwendet sind, die im eingeschobenen Zustand des Trägers (4, 6) über Ausnehmungen (9) im Halterungsteil (2) korrespondierend einander gegenüberstehen.

3. Ablagevorrichtung für zahnärztliche Handstücke mit einem hülsen- oder ringförmigen Halterungsteil (2) zur Ablage eines Handstückes (3) und einer elektrischen Schalteinrichtung, die Schaltmittel im Bereich des Halterungsteils (2) enthält, welche bei Entnahme bzw. Ablage des Handstückes (3) aus dem bzw. in das Halterungsteil (2) durch das Handstück (3) betätigt werden, dadurch gekennzeichnet, daß in Nähe des Halterungsteils (2) die Spule (10, 11) eines induktiven Schwingkreises (10, 23) angeordnet ist, daß die Spule (10, 11) auf einem Träger (4, 12) angeordnet ist, der, oder Teile von ihm (6, 12), als in das Halterungsteil (2) bzw. in ein dieses aufnehmende Gehäuse (1) einschiebbares Teil ausgebildet ist, und daß das Handstück (3) oder Teile von ihm aus den Schwingkreis bei Annäherung an die Spule (10, 11) verstimmendem Material bestehen.

4. Ablagevorrichtung nach einem der Ansprüche 1 bis 3, dadurch gekennzeichnet, daß die Rückwand (4) des Gehäuses (1) der Ablagevorrichtung als Träger vorgesehen ist.

5. Ablagevorrichtung nach einem der Ansprüche 1 bis 4, dadurch gekennzeichnet, daß am Träger (4, 6, 12) die elektrischen bzw. elektronischen Bauteile (15 bis 21; 23, 24, 30, 31, 33) der Schalteinrichtung angeordnet sind, vorzugsweise in Form einer abnehmbar am Träger gehaltenen Platine (5).

6. Ablagevorrichtung nach einem der Ansprüche 1 bis 5, dadurch gekennzeichnet, daß mehrere Halterungsteile (2) für mehrere Handstücke (3) zu einer Baueinheit zusammengefaßt sind und diese einen gemeinsamen Träger (4) für die Schaltmittel (7, 8, 10, 11) und die dazugehörige Elektronik haben.

7. Ablagevorrichtung nach Anspruch 3, dadurch gekennzeichnet, daß die Schalteinrichtung einen Schwellwertschalter (24) in Form eines integrierten Bauteiles enthält, an dem eingangsseitig der Schwingkreis (10, 23) angeschlossen ist.

## Claims

1. A rack for dental handpieces comprising a sleeve-shaped or ring-shaped holder (2) for depositing a handpiece (3), and comprising an electrical device which contains switching means in the region of the holder (2) and operated by the handpiece (3) when removing or depositing the handpiece (3) from or into the holder (2), as the case may be, characterised in that there is provided as switching means a light barrier (1, 7a/8, 8a) preferably operating in the IR-zone, which light barrier comprises a transmitter (7, 8) and receiver (7a, 8a) which are correspondingly arranged on a carrier element (4, 6) at a defined spacing which approximately corresponds to the inside width of the holder, and that the carrier (4, 6) or components thereof (6), is constructed as a member which can be inserted into the holder (2) of the rack or into a housing (1) which accommodates said rack, as the case may be.

2. A rack as claimed in claim 1, characterised in that luminescence diodes (7, 7a, 8, 8a), which in the inserted state of the carrier (4, 6) correspondingly stand opposite to one another above recesses (9) in the holder (2), are used as transmitter and receiver respectively.

3. A rack for dental handpieces comprising a sleeve-shaped or ring-shaped holder (2) for depositing a handpiece (3), and comprising an electrical device which contains switching means in the region of the holder (2), which switching means are operated by the handpiece (3) when removing or depositing the handpiece (3) from or in the holder (2), characterised in that there is arranged in the vicinity of the holder (2) the coil (10, 11) of an inductive resonant circuit (10, 23), that the coil (10, 11) is arranged on a carrier (4, 12), which carrier or parts thereof (6, 12) is designed as a member which can be inserted into the holder (2) or into a housing which accomodates the former, as the case may be, and that the handpiece (3), or parts thereof, consists of a material which detunes the resonant circuit on approaching the coil (10, 11).

4. A rack as claimed in one of claims 1 to 3, characterised in that the rear wall (4) of the housing (1) of the rack is provided as carrier.

5. A rack as claimed in one of claims 1 to 4, characterised in that the electrical and electronic components (15 to 21; 23, 24, 30, 31, 33) of the electrical device are arranged on the carrier (4, 6, 12), preferably in the form of a sheet bar (5) which is detachably supported on the carrier.

6. A rack as claimed in one of claims 1 to 5, characterised in that a plurality of holders (2) for a plurality of handpieces (3) are combined to form a unit and have a common carrier (4) for the switching means (7, 8, 10, 11) and assigned electronics.

7. A rack as claimed in claim 3, characterised in that the switching device contains a threshold value switch (24) in the form of an integrated component to which the resonant circuit (10, 23) is connected at the input end.

## Revendications

1. Dispositif de rangement pour des pièces à main de dentisterie du type comportant un élément de support (2) de la forme d'une douille ou annulaire pour ranger une pièce à main (3) et un dispositif de commutation électrique à moyens de commutation dans le voisainage de l'élément de support (2), commandés par la pièce à main (3) lorsque celle-ci est enlevée de l'élément de support ou y est introduite, caractérisé par le fait que les moyens de commutation sont constitués par une barrière électrique (7, 7a/8, 8a) opérant de préférence dans la plage infrarouge, comportant un émetteur (7, 8) disposé sur un élément porteur (4, 6) à une distance déterminée correspondant sensiblement au diamètre intérieur de l'élément de support, ainsi qu'un récepteur (7a, 8a), et que l'élément porteur (4, 6) ou des éléments (6) de ce dernier est réalisé sous la forme d'un élément susceptible d'être inséré dans l'élément de support du dispositif de rangement ou dans un boîtier (1) capable de recevoir l'élément de support.

2. Dispositif de rangement selon la revendication 1, caractérisé par le fait que l'on utilise comme émetteur et récepteur respectivement des diodes luminescentes (7, 7a, 8, 8a) qui, lorsque l'élément de fixation (4, 6) est inséré, se situent en face l'une de l'autre par l'intermédiaire d'une ouverture (9) ménagée dans l'élément de support (2).

3. Dispositif de rangement pour des pièces à main de dentisterie du type comportant un élément de support (2) de la forme d'une douille ou annulaire pour ranger une pièce à main (3) et un dispositif de commutation électrique à moyens de commutation dans le voisinage de l'élément de support (2), commandés par la pièce à main (3) lorsque celle-ci est enlevée de l'élément de support ou y est introduite, caractérisé par le fait que dans le voisinage de l'élément de support (2) est disposée la bobine (10, 11) d'un circuit oscillant inductif (10, 23), que la bobine (10, 11) est montée sur l'élément porteur (4, 12) qui est réalisé, ou dont certains de ces éléments sont réalisés de manière à constituer un élément capable d'être inséré dans l'élément de support (2) ou dans un boîtier capable de recevoir ce dernier, que la pièce à main (3) ou des parties de celle-ci sont constituées par un matériau désaccordant le circuit oscillant lorsqu'elles se rapprochent de la bobine (10, 11).

4. Dispositif de rangement selon l'une des revendications 1 à 3, caractérisé par le fait que la paroi arrière (4) du boîtier (1) du dispositif de rangement est constituée sous la forme d'un élément porteur.

5. Dispositif de rangement selon l'une des revendications 1 à 4, caractérisé par le fait que sur l'élément porteur (4, 6, 12) sont disposés des éléments électriques ou électroniques (15 à 21; 23, 24, 30, 31, 33) du dispositif de commutation, de préférence sous la forme d'une platine (5) portée de façon amovible par l'élément porteur.

6. Dispositif de rangement selon l'une des revendications 1 à 5, caractérisé par le fait que plusieurs dispositifs de support (2) pour plusieurs pièces à main (3) sont rassemblés pour former un ensemble de construction et que celles-ci comportent un élément porteur commun (4) pour les moyens de commutation (7, 8, 10, 11) et pour les moyens électroniques associés.

7. Dispositif de rangement selon la revendications 3, caractérisé par le fait que les moyens de commutation comportent un interrupteur à valeur de seuil (24) sous la forme d'un composant intégré, à l'entrée duquel est relié le circuit oscillant (10, 23).

FIG 1

FIG 2

FIG 3

Sender

Empfänger

FIG 4